# EUROPEAN PATENT APPLICATION

(11) **EP 4 219 002 A1**
(43) Date of publication of application: **02.08.2023**
(21) Application number: 23152045.3
(22) Date of filing: 17.01.2023
(51) Int. Cl.: B01J 23/63, B01J 23/10, B01J 37/03, B01J 37/08, B01J 37/16, B01J 35/10, B01D 53/94, C01G 25/02, B01J 37/18

(54) **DOPED CERIA-ZIRCONIA HAVING INCREASED STABILITY TO DISORDERING**

(30) Priority: 28.01.2022 US 202263267242 P
(71) Applicant: Johnson Matthey Public Limited Company, London EC4A 4AB (GB)
(72) Inventor: FISHER, Janet, Reading, RG4 9NH (GB); KOLPIN, Amy Louise, Reading, RG4 9NH (GB); THOMPSETT, David, Reading, RG4 9NH (GB)
(74) Representative: Wilson, Nicola Ann

(57) **Abstract**

Disclosed is a mixed oxide comprising CeₐZr_{b}M_{c}L_{d}O_{z}, where: M is Y, Sc, Ca, Mg or a mixture thereof; L is one or more rare earth elements, not including Y or Sc; 0.30 ≤ a ≤ 0.60; 0 < c ≤ 0.3; d ≤ 0.1; b = 1 - (a + c + d); and when M is trivalent, z = (2a + 2b + 1.5d + 1.5c), or when M is divalent, z = (2a + 2b + 1.5d + c).

## Description

### FIELD OF THE INVENTION

The invention relates to a mixed oxide, a method of preparing the mixed oxide, use of the mixed oxide, a catalyst article and a use of Y, Sc, Ca, Mg or a mixture thereof in a ceria-zirconia mixed oxide.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalysts, are widely utilized to reduce the amount of these pollutants emitted to atmosphere. A commonly used catalyst for gasoline engine applications is the Three-Way Catalyst (TWC). TWCs perform three main functions: (1) oxidation of CO; (2) oxidation of unburnt HCs; and (3) reduction of NOₓ to N₂.

TWCs that usually consist of Platinum Group Metals (PGMs) dispersed over high surface area alumina and ceria-zirconia supports were first introduced in the early 1980s for gasoline engine aftertreatment. With the need to meet increasingly more stringent emission limits, identifying alternative catalyst compositions which have improved catalytic properties for automotive applications is desirable. Thus, there are still needs to improve and synthesize novel TWC compounds with optimized catalytic properties.

Ceria-zirconia support materials are known to have oxygen storage capacity (OSC) properties that are useful in applications in which the ceria-zirconia mixed oxides are present as support materials in catalysts for use in exhaust systems. It has also been found that such ceria-zirconia mixed oxides can be treated to reducing conditions that cause re-distribution of the Ce ions within the mixed oxide such that the Ce ions become more dispersed therein (i.e. more ordered). It was surprisingly found by the inventors of WO2020201748 that such ordering of Ce within the ceria-zirconia mixed oxide resulted in a mixed oxide with improved OSC properties.

However, in oxidising conditions, such as those that may be experienced during use in an exhaust system, the Ce within the ordered ceria-zirconia mixed oxide may experience disordering. In turn, this disordering therefore has a negative impact on the OSC properties of the mixed oxide. This is not desirable. There is therefore a need to develop a ceria-zirconia mixed oxide with an increased ability to maintain its order (i.e. distribution of Ce ions) even when aged under oxidising conditions, such as under lean hydrothermal ageing conditions.

US7919429 relates to a zirconia-ceria-yttria-based mixed oxide and a process for producing the same.

### SUMMARY OF THE INVENTION

One aspect of the present disclosure is directed to a mixed oxide comprising CeₐZr_{b}M_{c}L_{d}O_{z}, where: M is Y, Sc, Ca, Mg or a mixture thereof; L is one or more rare earth elements, not including Y or Sc; 0.30 ≤ a ≤ 0.60; 0 < c ≤ 0.3; d ≤ 0.1; b = 1 - (a + c + d); and when M is trivalent, z = (2a + 2b + 1.5d + 1.5c), or when M is divalent, z = (2a + 2b + 1.5d + c).

Another aspect of the present disclosure is directed to a method of preparing the mixed oxide described herein, the method comprising: (a) subjecting oxide precursors of the Ce, the Zr, the M and the L if present to reduction conditions to form a reduced form of the mixed oxide; and (b) optionally oxidizing the reduced form of the mixed oxide to form the mixed oxide.

Another aspect of the present disclosure is directed to a mixed oxide described herein that has been prepared according to a method described herein.

Another aspect of the present disclosure is directed to a mixed oxide comprising CeₐZr_{b}X_{c}L_{d}O_{z}, where: X is one or more metal ions wherein the ratio of ionic radii (8CN) of X/Zr is less than 1.29; L is one or more rare earth elements; 0.30 ≤ a ≤ 0.60; 0 < c ≤ 0.3; d ≤ 0.1; b = 1 - (a + c + d); and when X is trivalent, z = (2a + 2b + 1.5d + 1.5c), or when X is divalent, z = (2a + 2b + 1.5d + c).

The invention also encompasses the use of a mixed oxide described herein in (a) a gasoline after-treatment system, such as in a Three Way Catalyst (TWC) or (coated) gasoline or diesel particulate or soot filter; (b) a lean NOₓ trap for diesel after-treatment system; (c) a passive NOₓ adsorber (PNA); (d) a diesel oxidation catalyst (DOC); (e) a Water-Gas Shift catalyst; (f) a hydrocarbon reforming catalyst, including as a steam reforming and/or partial oxidation catalyst; and/or (g) a high temperature water splitting catalyst to give H₂.

Another aspect of the present disclosure is directed to a catalyst article comprising the mixed oxide described herein, wherein the catalyst article is a TWC, a (coated) gasoline or diesel particulate or soot filter, a lean NOₓ trap for diesel aftertreatment, a PNA, a DOC, a water-gas shift catalyst, a hydrocarbon reforming catalyst, a steam reforming catalyst, a partial oxidation catalyst; and/or a high temperature water splitting catalyst.

Another aspect of the present disclosure is directed to the use of Y, Sc, Ca, Mg or a mixture thereof in a ceria-zirconia mixed oxide to increase the resistance of said ceria-zirconia mixed oxide to disordering of the cerium ions therein when subjected to oxidising conditions.

### BRIEF DESCRIPTION OF THE DRAWINGS

**FIG. 1** shows the OSC testing results of **Example 2.**
**FIG. 2** shows the OSC testing results of **Example 3.**
**FIG. 3** shows the OSC testing results of **Example 4.**
**FIG. 4** shows the OSC testing results of **Example 5.**
**FIG. 5** shows the OSC testing results of the **Reference Example.**

### DETAILED DESCRIPTION OF THE INVENTION

The present invention seeks to tackle at least some of the problems associated with the prior art or at least to provide a commercially acceptable alternative solution thereto.

In a first aspect, the present invention provides a mixed oxide comprising CeₐZr_{b}M_{c}L_{d}O_{z}, where: M is Y, Sc, Ca, Mg or a mixture thereof; L is one or more rare earth elements, not including Y or Sc; 0.30 ≤ a ≤ 0.60; 0 < c ≤ 0.3; d ≤ 0.1; b = 1 - (a + c + d); and when M is trivalent, z = (2a + 2b + 1.5d + 1.5c), or when M is divalent, z = (2a + 2b + 1.5d + c). Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, the inventors have found that doping a ceria-zirconia mixed oxide (hereinafter CZO) with M as defined herein may increase the resistance of the CZO to disordering of the cerium ions therein when subjected to oxidising conditions, such as those experienced by a catalyst article in use in an exhaust gas treatment system. In other words, if the mixed oxide according to the invention is subjected to an ordering treatment, such as by reduction as described in WO2020201748, it has been surprisingly found that the mixed oxide may be less susceptible to the disordering of the Ce ions when the mixed oxide is subjected to oxidising conditions as compared to known CZOs, such as simple CeₓZr_{y}O₂ (0<x<1; y = 1-x).

Thus, advantageously, the mixed oxide of the invention may maintain increased OSC properties as a result of increased Ce ordering therein for longer in use. In other words, use of the mixed oxide of the present invention in a catalyst article for treatment of exhaust gas may result in a catalyst article having improved OSC properties. This may be particularly advantageous for TWC applications, for example.

The term "mixed oxide" as used herein may encompass an oxide that contains cations of more than one chemical element, for example at least Ce, Zr and M in this case. The mixed oxide may be in a single phase, for example.

The CeₐZr_{b}M_{c}L_{d}O_{z} of the invention is typically crystalline. Preferably, the mixed oxide is crystalline. The term "crystalline" as used herein is used within its normal meaning in the art and may encompass a solid material having long-range order, i.e. periodic translational ordering of atoms or molecules within the solid.

In some preferred embodiments, M is Y. In other preferred embodiments, M is Sc, Ca, Mg or a mixture thereof. In other preferred embodiments, M is Sc. In other preferred embodiments, M is Ca. In other preferred embodiments, M is Mg.

Preferably, 0 < d ≤ 0.1. In other words, the CeₐZr_{b}M_{c}L_{d}O_{z} preferably comprises L as a required element. L is one or more rare earth elements, not including Y or Sc. That is, for the particular mixed oxide, L is not the same as the M that is present. The presence of L may advantageously increase the surface-area-to-volume ratio of the CZO without hindering the effects realised by the presence of the M element in the mixed oxide, for example. The presence of L may also improve the thermal stability of the mixed oxide.

The term "rare earth element" as used herein may encompass scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu). Preferably, L comprises La, Pr and/or Nd, more preferably La and/or Nd. In some preferred embodiments, L is La. In other preferred embodiments, L is Nd. In other preferred embodiments, L is a mixture of La and Nd.

Preferably, 0.40 ≤ a ≤ 0.60, more preferably 0.50 < a ≤ 0.60. For example, in some preferred embodiments, 0.52 ≤ a ≤ 0.60, preferably 0.52 ≤ a ≤ 0.58, more preferably 0.54 ≤ a ≤ 0.56. In other preferred embodiments, 0.40 < a ≤ 0.50, preferably 0.42 < a ≤ 0.50, more preferably 0.42 < a ≤ 0.48, even more preferably 0.44 < a ≤ 0.46. In other preferred embodiments, 0.42 < a ≤ 0.58, preferably 0.44 < a ≤ 0.56, more preferably 0.46 < a ≤ 0.54, even more preferably 0.48 < a ≤ 0.52. In other preferred embodiments, 0.30 ≤ a ≤ 0.50, preferably 0.30 ≤ a ≤ 0.45, more preferably 0.30 ≤ a ≤ 0.40, even more preferably 0.35 ≤ a ≤ 0.40.

In some preferred embodiments, 0.10 ≤ c ≤ 0.3, preferably 0.15 ≤ c ≤ 0.3, more preferably 0.2 ≤ c ≤ 0.3, even more preferably 0.25 ≤ c ≤ 0.3, still more preferably 0.27 ≤ c ≤ 0.3. In other preferred embodiments, 0 < c ≤ 0.25, preferably 0 < c ≤ 0.20, more preferably 0 < c ≤ 0.15, even more preferably 0 < c ≤ 0.10, still more preferably 0 < c ≤ 0.05. In other preferred embodiments, 0.05 ≤ c ≤ 0.25, preferably 0.10 ≤ c ≤ 0.20, more preferably 0.12 ≤ c ≤ 0.18, even more preferably 0.14 ≤ c ≤ 0.16.

Preferably, 0.06 < d ≤ 0.1, more preferably 0.07 < d ≤ 0.1. In other preferred embodiments, 0.01 ≤ d ≤ 0.1, preferably 0.03 ≤ d ≤ 0.1, more preferably 0.05 ≤ d ≤ 0.1, still more preferably 0.06 ≤ d ≤ 0.1. In other preferred embodiments, 0.01 ≤ d ≤ 0.09, preferably 0.01 ≤ d ≤ 0.07, more preferably 0.01 ≤ d ≤ 0.05, still more preferably 0.01 ≤ d ≤ 0.03. In other preferred embodiments, 0.02 ≤ d ≤ 0.08, preferably 0.03 ≤ d ≤ 0.07, more preferably 0.04 ≤ d ≤ 0.06.

The mixed oxide may contain, at least in part, localized concentrations of the Ce. However, preferably, the Ce ions are as evenly distributed as possible. The degree of ordering (or "evenness" of distribution) can be quantified in terms of the Ce-Ce (or Ce-O-Ce) coordination number within the mixed oxide, and especially in terms of the approach to the theoretically perfect distribution. This represents a measure of the degree of ordering (or mixing) of Ce within the cation sub-lattice of the structure. In a perfectly mixed lattice (e.g. of a binary mixed oxide) the Ce should have the minimum number of Ce-O-Ce near neighbours and conversely the maximum number of Ce-O-M-element near neighbours. An increase over this minimum represents incomplete mixing (or nano-clustering of the Ce within the structure).

The terms "Ce-Ce coordination number" and Ce-O-Ce coordination number" are used interchangeably to refer to the mean number of Ce atoms adjacent (with an intervening O) to any other Ce atom in the mixed oxide lattice.

The theoretical minimum Ce-O-Ce value for a given composition is determined by reference to pure CeO₂. CeO₂ has a face centered cubic structure and each Ce has 8 O near neighbours and 12 Ce next near neighbours. Therefore, for example for a perfectly mixed Ce_{0.5}Zr_{0.5}O₂ structure, half the Ce next near neighbours are replaced by Zr, hence a Ce-Ce CN of 6 (likewise, in a structure described herein in terms of CeₐZr_{b}M_{c}L_{d}O_{z} where a = 0.5, these conditions are also met, albeit where the next nearest neighbors are Zr, M and/or L elements). Therefore, a Ce-Ce CN of 7.8 represents an incomplete mixed lattice as the Ce-Zr CN will be only 4.2. The local structure of this material would contain nano-domains of Ce-rich and Zr-rich regions within individual crystallites. This incomplete mixing is difficult to extract from the XRD powder patterns. The only feature that is useful is the extra superlattice reflections that develop from a well-ordered structure as the Ce and Zr cation sub-lattices develop an ordered interpenetrating arrangement which results in extra diffraction reflections. Further, the ordering can also be measured by a combination of X-ray diffraction and X-ray Absorption spectroscopy [specifically Extended X-ray Absorption Fine Structure (EXAFS) or by X-ray scattering using Pair Distribution Function (PDF) analysis]. This ordering may therefore be defined in terms of at least one of these methods.

Thus, preferably, the CeₐZr_{b}M_{c}L_{d}O_{z} has a Ce-Ce coordination number (CN) that is within 20% of the theoretical minimum value for the corresponding CeₐZr_{b}M_{c}L_{d}O_{z} assuming perfect Ce distribution, more preferably within 18%, 16%, 15%, 14%, 13%, 12%, 11%, 10%, 9%, 8%, 7%, 6%, 5%, 4%, 3%, 2% or 1% of the theoretical minimum value for the corresponding CeₐZr_{b}M_{c}L_{d}O_{z} assuming perfect Ce distribution. This coordination can be measured macroscopically or in specific regions of the CeₐZr_{b}M_{c}L_{d}O_{z}.

In some mixed oxides as described herein, the stability of the mixed oxide may be defined in terms of the change of the CN after the mixed oxide is subjected to certain thermal, reductive, and/or oxidative stresses. Thus, in some preferred embodiments, the mixed oxide exhibits a loss of less than 5% of its Ce-Ce CN after exposing the mixed oxide to a temperature of 600°C for 1 hour in an oxidising atmosphere, preferably in air. In preferred embodiments, the mixed oxide may also exhibit a loss of less than 10%, preferably less than 5%, of its Ce-Ce CN after exposing the mixed oxide to a temperature of 1000 °C for 1 hour in an oxidising atmosphere, preferably in air.

Nano-clustering or even macro-clustering occurs in Ce-containing mixed oxide materials prepared by grinding, mixing, and sintering component oxides. Such methods necessarily lead to incomplete, or at least less than complete, or "perfect," mixing, resulting in localized areas of residual ceria having concentration of higher levels of Ce-O-Ce near neighbors. Ce containing mixed oxide materials can also be made by other routes such as coprecipitation, but here again, unless special precautions are taken in the synthesis, localized regions of imperfect mixing can occur. For example, if the Ce content is less than or equal to 50 mol% and the Ce is evenly distributed within the lattice, no more than half of the cations neighbouring each Ce atom should theoretically be Ce. Although such samples, by careful control of preparation conditions, may be single phase as determined by X-ray diffraction, they almost always contain regions of imperfect mixing and Ce is clustered to a greater or lesser extent. For some specific Ce containing mixed oxide chemical compositions, perfect dispersion of Ce within the structure manifests as a very high degree of cation sub-lattice ordering which is possible to see through the appearance of weak super lattice lines in XRD. However, in general, advanced characterisation which is sensitive to local structure is required to determine the extent of Ce-O-Ce neighbours and measure the Ce distribution within the structure. In other words, without subjecting mixed oxides with the stoichiometry defined herein to certain ordering processes as described herein, for example under reducing conditions, it may be unlikely that the Ce will be so highly ordered within the lattice structure.

Preferably, the mixed oxide consists of the CeₐZr_{b}M_{c}L_{d}O_{z}. In other words, the mixed oxide preferably is the CeₐZr_{b}M_{c}L_{d}O_{z}.

The mixed oxide described herein may also further comprise a transition metal or transition metal oxide catalyst distributed on a surface of the mixed oxide and/or within the pores of the aggregated or agglomerated mixed oxide particles. Such materials preferably comprise at least one metal and/or oxide thereof (including physical mixtures or alloys) of at least one of Cr, Fe, Ru, Os, Co, Rh, Ir, Ni, Pd, Pt, Cu, Ag, Au, or Zn, preferably Pd, Pt and/or Rh. Such catalysts may be deposited chemically or by vapor deposition techniques as are known by those skilled in the art.

In a further aspect, the present invention provides a method of preparing the mixed oxide described herein, the method comprising: (a) subjecting oxide precursors of the Ce, the Zr, the M and the L if present to reduction conditions to form a reduced form of the mixed oxide; and (b) optionally oxidizing the reduced form of the mixed oxide to form the mixed oxide.

In some Ce-containing mixed oxides, the formation of Ce in the +3 oxidation state facilitates the facile and even distribution of the Ce by migration throughout the lattice of the crystalline mixed oxides. These principles can also be used to prepare Ce-containing crystalline mixed oxides in which the Ce is substantially evenly dispersed in the mixed oxide lattice from oxide precursors or to re-distribute Ce within existing crystalline structures, i.e. in the present aspect. Such methods have, in general, been disclosed in WO2020201748, for example.

Reduction conditions may comprise supporting the mixed oxide on a dried carbon support and heating in N₂ at 1050°C for 4h (ramp up 10°C/min). This may be described as "strong reduction" conditions. The term "reduced form of the mixed oxide" as used herein may encompass a mixed oxide in which Ce ions occupy the Ce³⁺ oxidation state, for example in which a majority of the Ce ions occupy the Ce³⁺ oxidation state.

The oxidizing conditions may comprise heating in air at 600°C for 1h. This may be described as "medium oxidation" conditions. Alternatively, the oxidizing conditions may comprise heating in air at 1000°C for 1hr, for example. This may be described as "strong oxidation" conditions.

Preferably, the reduction conditions are a carbothermal reduction or a hydrogen reduction, more preferably the oxide precursors of the Ce, the Zr, the M and the L if present are deposited onto a carbon support before subjecting the deposited oxide precursors to the carbothermal reduction conditions, even more preferably the carbon support is a high-surface-area carbon support. Such high-surface-area carbon supports are known in the art. For example, a typical high-surface-area carbon support has a surface area of 200 m²/g of more.

In a further aspect, the present invention provides a mixed oxide described herein that has been prepared according to a method described herein.

In a further aspect, the present invention provides a mixed oxide comprising CeₐZr_{b}X_{c}L_{d}O_{z}, where: X is one or more metal ions wherein the ratio of ionic radii (8CN) of X/Zr is less than 1.29; L is one or more rare earth elements; 0.30 ≤ a ≤ 0.60; 0 < c ≤ 0.3; d ≤ 0.1; b = 1 - (a + c + d); and when X is trivalent, z = (2a + 2b + 1.5d + 1.5c), or when X is divalent, z = (2a + 2b + 1.5d + c).

The term "8CN" as used herein means that the ionic radius may be calculated assuming a coordination number to said ion of 8. If an element is present that fulfils the criteria for both X and L, then the element is counted as an X element for the purposes of the invention.

It should be understood that any of the preferred features and embodiments in relation to the first aspect apply equally to this aspect (considering M of the first aspect as X of this aspect, for example). Without wishing to be bound by theory, it is hypothesised that the ratio of ionic radii between X and Zr may be a determining factor in whether or not the dopant X exhibits the effect of increasing the resistance of the CZO to disordering of the cerium ions therein when subjected to oxidising conditions.

Thus, preferably the ratio of ionic radii (8CN) of X/Zr is less than 1.25, preferably less than 1.23. In some preferred embodiments, the ratio of ionic radii (8CN) of X/Zr is less than 1.28, preferably less than 1.27, more preferably less than 1.26, even more preferably less than 1.25, still more preferably less than 1.24, still more preferably less than 1.23, still more preferably less than 1.22 and still more preferably less than 1.21.

In a further aspect the present invention provides the use of a mixed oxide described herein in (a) a gasoline after-treatment system, such as in a Three Way Catalyst (TWC) or (coated) gasoline or diesel particulate or soot filter; (b) a lean NOₓ trap for diesel after-treatment system; (c) a passive NOₓ adsorber (PNA); (d) a diesel oxidation catalyst (DOC); (e) a Water-Gas Shift catalyst; (f) a hydrocarbon reforming catalyst, including as a steam reforming and/or partial oxidation catalyst; and/or (g) a high temperature water splitting catalyst to give H₂.

In a further aspect the present invention provides a catalyst article comprising the mixed oxide described herein, wherein the catalyst article is a TWC, a (coated) gasoline or diesel particulate or soot filter, a lean NOₓ trap for diesel aftertreatment, a PNA, a DOC, a water-gas shift catalyst, a hydrocarbon reforming catalyst, a steam reforming catalyst, a partial oxidation catalyst; and/or a high temperature water splitting catalyst.

The term "catalyst article" used herein may encompass an article in which a catalyst is supported thereon or therein. The article may take the form of, for example, a honeycomb monolith, or a filter, e.g. a wall flow filter or a flow-through filter. The catalyst article may be for use in an emission treatment system, in particular an emission treatment system for a gasoline engine, preferably a stoichiometric gasoline engine. The catalyst article may be for use in three-way catalysis.

In a further aspect the present invention provides the use of Y, Sc, Ca, Mg or a mixture thereof in a ceria-zirconia mixed oxide to increase the resistance of said ceria-zirconia mixed oxide to disordering of the cerium ions therein when subjected to oxidising conditions. In other words, the present invention also provides the use of element M as defined herein in a ceria-zirconia mixed oxide to increase the resistance of said ceria-zirconia mixed oxide to disordering of the cerium ions therein when subjected to oxidising conditions. The present invention also provides the use of element X as defined herein in a ceria-zirconia mixed oxide to increase the resistance of said ceria-zirconia mixed oxide to disordering of the cerium ions therein when subjected to oxidising conditions. The term "the use of R in a ceria-zirconia mixed oxide..." as used herein means that the CZO is doped with element(s) R, for example, such that the element R may form part of the lattice structure, i.e. by replacing Ce and/or Zr lattice positions.

Preferably, the oxidising conditions comprise heating the mixed oxide to a temperature of 600°C for 1 hour in an oxidising atmosphere, preferably in air.

Preferably, the oxidising conditions comprise heating the mixed oxide to a temperature of 1000°C for 1 hour in an oxidising atmosphere, preferably in air.

Preferably, the Y, Sc, Ca, Mg (or element M or X as defined herein) or a mixture thereof is incorporated into the mixed oxide at greater than 0 to 30 mol%, based on the total amount of metal atoms in the mixed oxide, more preferably 10 to 30 mol%, even more preferably 15 to 30 mol%, still more preferably 20 to 30 mol%, yet still more preferably 25 to 30 mol%. In other preferred embodiments, the Y, Sc, Ca, Mg (or element M or X as defined herein) or a mixture thereof is incorporated into the mixed oxide at greater than 0 to 25 mol%, based on the total amount of metal atoms in the mixed oxide, more preferably greater than 0 to 20 mol%, even more preferably greater than 0 to 15 mol%, still more preferably greater than 0 to 10 mol%, yet still more preferably greater than 0 to 5 mol%. In other preferred embodiments, the Y, Sc, Ca, Mg (or element M or X as defined herein) or a mixture thereof is incorporated into the mixed oxide at 5 to 25 mol%, based on the total amount of metal atoms in the mixed oxide, more preferably 10 to 20 mol%, even more preferably 12 to 18 mol%, still more preferably 14 to 16 mol%.

The invention will now be described in relation to the following non-limiting examples.

### Example 1

A mixed oxide was manufactured as follows. The mixed oxide had the formulation Ce_{0.375}Y_{0.125}Zr_{0.5}O_{1.97} (labelled 1A herein).

The reagents used were as follows:
Ketjen EC300J (5 g, 0.416 mol)
Y(NO₃)₃.6H₂O (4.79 g, 0.0125 mol)
Cerric nitrate (37.5 ml, 0.0375 mol)
ZrO(NO₃)₂ (22.6 ml, 0.05 mol, 273g/L ZrO₂)
Aq. NH₃ conc. diluted 50:50 with water (used as required)

The Ketjen EC300J was dispersed in water (400 ml) using a Silverson mixer (4000 rpm, 10 min). This was then transferred to 800 mL beaker fitted with magnetic stirrer bar and pH probe. The slurry was stirred using magnet bar and the pH was adjusted to 9 with NH₃. Yttrium nitrate was dissolved in water and ceric nitrate and zirconyl nitrate solutions were added, the volume was ca. 100 mL. This solution was pumped into the carbon slurry at ca. 10 ml/min and ammonia was added drop wise by hand to keep the pH at 9.0. When the addition was complete the slurry was stirred for 1h and then filtered. The sample was washed on filter bed until conductivity was lower than 500 µS.

The material was dried at 105 °C (yield = 21.23g) and roughly ground in a pestle and mortar. The material was independently subjected to SRMO (strong reduction, medium oxidation) and SRSO (strong reduction, strong oxidation) conditions.

### SRMO treatment:

An approximately 5 g sample of dried carbon supported material was fired in N₂ at 1050 °C for 4h (ramp up 10°C/min) and then in air at 600°C for 1h to burn out carbon.
BET surface area after SRMO treatment = 24 m²g⁻¹
XRD shows SRMO at 1050°C gives kappa phase a=10.505Å 13.5nm

### SRSO treatment:

The same reduction treatment was applied. However, the sample was fired in air for 1h at 1000°C instead of 600°C.
BET surface area after SRSO treatment = 17 m²g⁻¹
XRD shows kappa phase a=10.5070Å 16nm

Surprisingly, the Y-doped CZO can maintain its more ordered phase even after strong oxidation conditions. In other words, the benefit of Ce ordering caused by the strong reduction treatment is not completely lost even after strong oxidation. The strong oxidation conditions are used to push the limits of the mixed oxide's resistance to disordering, for example. The conditions may also simulate the extreme end of the conditions such a mixed oxide may experience in use as part of an exhaust gas catalyst.

### Example 2

The untreated (i.e. disordered, labelled F600), SRMO-treated and SRSO-treated 1A (Ce_{0.375}Y_{0.125}Zr_{0.5}O_{1.97} mixed oxide) of Example 1 were subjected to OSC testing.

In a typical OSC testing experiment, 0.05g of the sample was programmed to be cycled between oxidizing (50mL min⁻¹ of 5%O₂/He) and reducing conditions (50 mL min⁻¹ of 100%CO), using 10 mL min⁻¹ Ar as a tracer gas and 40 mL min⁻¹ He as a carrier gas. A mass spectrometer was used to monitor the CO₂ and O₂ signals over multiple redox cycles and the OSC is calculated as the area under the CO₂ curve for the first 3.5 seconds ("fast") or first 300 seconds ("total") from where the CO₂ starts to be produced.

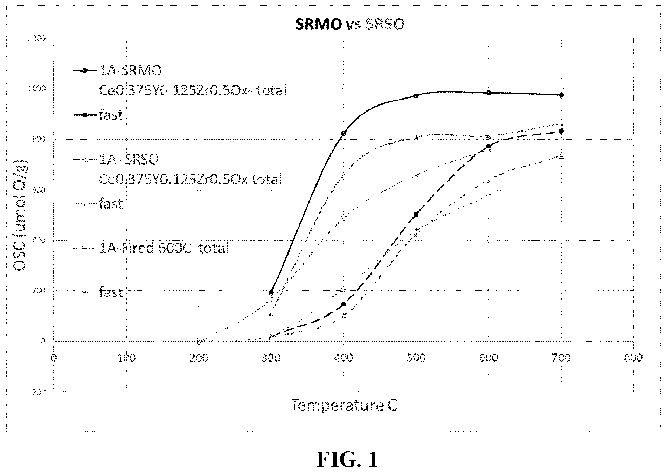

The results are shown in **FIG. 1****.** The "fast", dashed lines show the measurement taken after approximately 3.5 s of testing at each temperature. The solid lines represent the measurements taken after approximately 5 minutes. The F600 had a BET surface area of 106m²g⁻¹. The SRMO-treated had a BET surface area of 27m²g⁻¹. The SRSO-treated had a BET surface area of 17m²g⁻¹.

It can be seen that, although the OSC of the mixed oxide decreases on SRSO treatment compared to SRMO treatment, showing that the Ce in the mixed oxide is disordered more on SO treatment compared to MO treatment, the SRSO-treated mixed oxide surprisingly maintains higher OSC than the F600. In other words, the mixed oxide of the invention maintains a higher state of Ce ordering even after SO treatment.

### Example 3

The following samples were manufactured according to similar methods as that in Example 1. X-ray diffraction (XRD) was used to determine the lattice parameter of the crystalline mixed oxide after SRMO and SRSO treatment for each mixed oxide. The results are summarised in Table 1.

**Table 1**

| **Sample** | **Composition** | **XRD SRMO** | **XRD SRSO** |
|---|---|---|---|
| Reference 1 | Ce_{0.5}Zr_{0.5}O₂ *reference* | a =10.541Å 11nm | cubic a=5.27Å 32nm + tetragonal a=3.745Å c=5.369Å 5.5nm |
| 1B | Ce_{0.4375}Y_{0.0625}Zr_{0.5}Oₓ | a = 10.522Å 20nm | a=10.525Å 23nm |
| 1C | Ce_{0.375}Y_{0.0625}Zr_{0.5625}Oₓ | a = 10.503Å 15nm | cubic a=5.248Å 28nm |
| 1A | Ce_{0.375}Y_{0.125}Zr_{0.5}Oₓ | a = 10.506Å 13nm | a=10.507Å 16nm |

The Y-doping of the mixed oxide surprisingly enables the mixed oxide to maintain its order and crystal structure compared to the CZO reference.

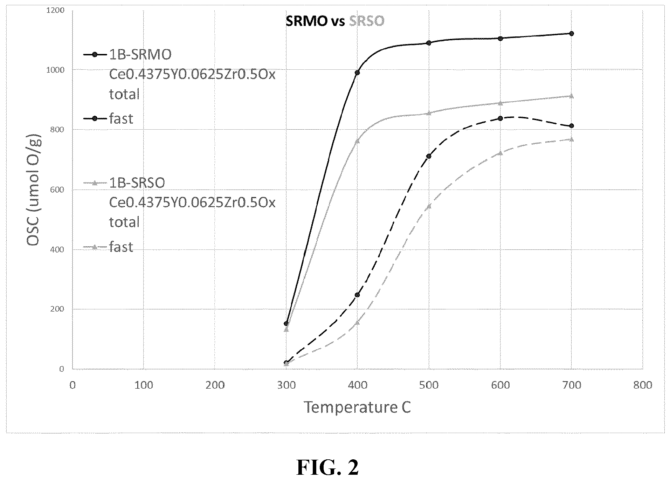

**FIG. 2** shows OSC measurements of the 1B sample after SRMO and SRSO treatment.

### Example 4

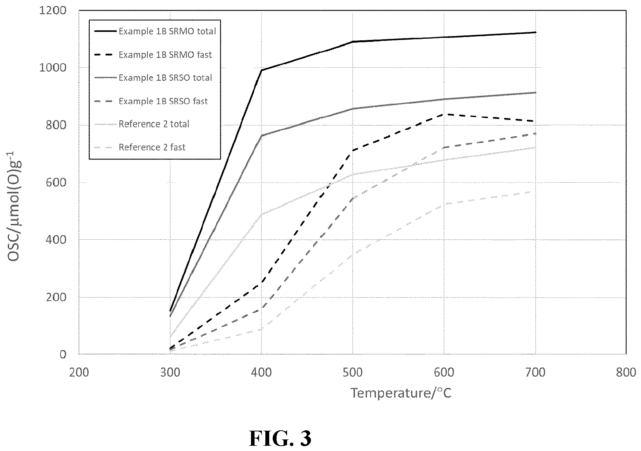

The OSC of sample Example 1B according to the invention was tested after SRMO and SRSO treatment. This was compared with the OSC of conventional Ce_{0.43}Zr_{0.52}La_{0.01}Nd_{0.04}Oₓ (labelled Reference 2) which had been calcined in air at 1100 °C. The results are shown in **FIG. 3****.** It can be seen that the invention demonstrates a benefit in fast OSC at low temperature even after SRSO treatment compared to a conventional CeZrLaNdOₓ of the same Ce content (Reference 2).

### Example 5

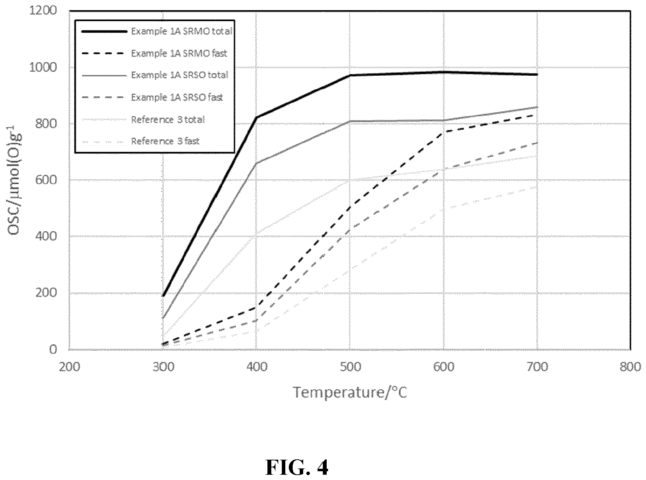

The OSC of sample Example 1A according to the invention was tested after SRMO and SRSO treatment. This was compared with the OSC of conventional Ce_{0.38}Zr_{0.57}La_{0.01}Nd_{0.04}Oₓ (labelled Reference 3) which had been calcined in air at 1100°C. The results are shown in **FIG. 4****.** It can be seen that the invention demonstrates a benefit in fast OSC at low temperature even after SRSO treatment compared to a conventional CeZrLaNdOₓ of the same Ce content (Reference 3).

### Reference Example

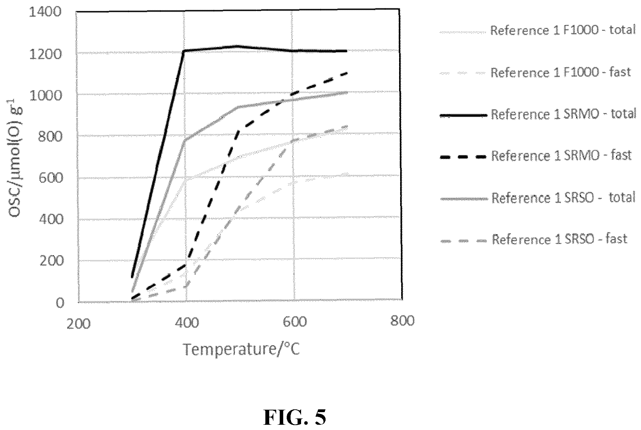

The OSC of a conventional CZO (Ce_{0.5}Zr_{0.5}O₂; Reference 1) was measured after no treatment (labelled F1000), SRMO treatment and SRSO treatment. The results are shown in **FIG. 5****.** It can be seen that the conventional CZO has no benefit in fast OSC at low temperature after SRSO.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A mixed oxide comprising CeₐZr_{b}M_{c}L_{d}O_{z}, where:
M is Y, Sc, Ca, Mg or a mixture thereof;
L is one or more rare earth elements, not including Y or Sc;
0.30 ≤ a ≤ 0.60;
0< c ≤ 0.3;
d < 0.1;
b = 1 - (a + c + d); and
when M is trivalent, z = (2a + 2b + 1.5d + 1.5c), or when M is divalent, z = (2a + 2b + 1.5d + c).

2. The mixed oxide of claim 1, wherein M is Y.

3. The mixed oxide of claim 1, wherein M is Sc, Ca, Mg or a mixture thereof.

4. The mixed oxide of any preceding claim, wherein 0 < d ≤ 0.1.

5. The mixed oxide of any preceding claim, wherein L comprises La, Pr and/or Nd.

6. The mixed oxide of any preceding claim, wherein 0.40 ≤ a ≤ 0.60, preferably 0.50 < a ≤ 0.60.

7. The mixed oxide of any preceding claim, wherein 0.10 ≤ c ≤ 0.3, preferably 0.15 ≤ c ≤ 0.3, more preferably 0.2 ≤ c ≤ 0.3, even more preferably 0.25 ≤ c ≤ 0.3, still more preferably 0.27 ≤ c ≤ 0.3.

8. The mixed oxide of any preceding claim, wherein 0.06 < d ≤ 0.1, preferably wherein 0.07 < d ≤ 0.1.

9. The mixed oxide of any preceding claim, wherein the CeₐZr_{b}M_{c}L_{d}O_{z} has a Ce-Ce coordination number (CN) that is within 20% of the theoretical minimum value for the corresponding CeₐZr_{b}M_{c}L_{d}O_{z} assuming perfect Ce distribution.

10. The mixed oxide of any preceding claim, wherein the CeₐZr_{b}M_{c}L_{d}O_{z} exhibits a loss of less than 5% of its Ce-Ce CN after exposing the mixed oxide to a temperature of 600°C for 1 hour in an oxidising atmosphere, preferably in air.

11. The mixed oxide of any preceding claim, wherein the CeₐZr_{b}M_{c}L_{d}O_{z} exhibits a loss of less than 10%, preferably less than 5%, of its Ce-Ce CN after exposing the mixed oxide to a temperature of 1000°C for 1 hour in an oxidising atmosphere, preferably in air.

12. The mixed oxide of any preceding claim, wherein the mixed oxide consists of the CeₐZr_{b}M_{c}L_{d}O_{z}.

13. A method of preparing the mixed oxide of any of the preceding claims, the method comprising:
(a) subjecting oxide precursors of the Ce, the Zr, the M and the L if present to reduction conditions to form a reduced form of the mixed oxide; and
(b) optionally oxidizing the reduced form of the mixed oxide to form the mixed oxide.

14. A mixed oxide comprising CeₐZr_{b}X_{c}L_{d}O_{z}, where:
X is one or more metal ions wherein the ratio of ionic radii (8CN) of X/Zr is less than 1.29;
L is one or more rare earth elements;
0.30 ≤ a ≤ 0.60;
0< c ≤ 0.3;
d < 0.1;
b = 1 - (a + c + d); and
when X is trivalent, z = (2a + 2b + 1.5d + 1. 5c), or when X is divalent, z = (2a + 2b + 1.5d + c).

15. A catalyst article comprising the mixed oxide according to any of claims 1 to 12 or 14, wherein the catalyst article is a TWC, a (coated) gasoline or diesel particulate or soot filter, a lean NOₓ trap for diesel aftertreatment, a PNA, a DOC, a water-gas shift catalyst, a hydrocarbon reforming catalyst, a steam reforming catalyst, a partial oxidation catalyst; and/or a high temperature water splitting catalyst.
